# FASCICULE DE BREVET EUROPEEN

(11) **EP 2 928 675 B1**
(45) Date de publication et mention de la délivrance du brevet: **07.09.2016**
(21) Numéro de dépôt: 13815075.0
(22) Date de dépôt: 06.12.2013
(51) Int. Cl.: B29C 70/52, B29B 15/12, B29C 69/02, B29C 53/58

(54) **DISPOSITIF D'IMPREGNATION, UNITE DE FABRICATION D'UN PROFILE CREUX PAR PULTRUSION COMPRENANT UN TEL DISPOSITIF ET PROCEDE DE FABRICATION CORRESPONDANT**
IMPRÄGNIERUNGSVORRICHTUNG, EINHEIT ZUR HERSTELLUNG EINES HOHLPROFILABSCHNITTS DURCH PULTRUSION MIT SOLCH EINER VORRICHTUNG UND ZUGEHÖRIGES HERSTELLUNGSVERFAHREN
IMPREGNATION DEVICE, UNIT FOR MANUFACTURING A HOLLOW PROFILE SECTION BY PULTRUSION COMPRISING SUCH A DEVICE, AND CORRESPONDING MANUFACTURING METHOD

(30) Priorité: 06.12.2012 FR 1261726
(43) Date de publication de la demande: 14.10.2015
(73) Titulaire: STRUCTIL S.A., 91710 Vert-Le-Petit (FR)
(72) Inventeur: ESSAYAN, Sophie, F-64000 Pau (FR)
(74) Mandataire: Desormiere, Pierre-Louis
(86) Numéro de dépôt international: PCT/FR2013/052976
(87) Numéro de publication internationale: WO 2014/087114

(56) Documents cités:
- EP-A1- 0 513 927
- WO-A1-2011/131664
- US-A- 3 033 729
- US-A1- 2012 199 998

## Description

La présente invention concerne la fabrication de profilés par pultrusion, notamment de profilés creux.

L'invention concerne, plus particulièrement, un dispositif pour l'imprégnation de fibres avec de la résine, pouvant notamment être utilisé dans une unité de fabrication d'un profilé creux par pultrusion. Elle concerne, en outre, une unité de fabrication d'un profilé creux par pultrusion comprenant un tel dispositif d'imprégnation. Elle concerne, enfin, un procédé d'imprégnation et de fabrication d'un profilé creux correspondants.

La technique de pultrusion ou extrusion par étirage consiste à faire passer des fibres préalablement imprégnées de résine à travers une filière d'extrusion en les "tirant" à l'aide de rouleaux. Cette technique permet d'obtenir des profilés de sections quelconques, pleins ou creux.

Dans les procédés connus à ce jour, l'imprégnation des fibres se fait, en amont de la filière, dans un bain de trempage du type décrit dans le brevet américain US 4,154,634.

Le document US 2012/0199998 divulgue un dispositif pour l'imprégnation de fibres avec un matériau polymère conformément au préambule de la revendication 1.

Les inconvénients de ces procédés connus sont multiples.

Lorsque les fibres sont imprégnées dans un bain de trempage, il est nécessaire que la résine constituant le bain ne polymérise pas pendant la mise en oeuvre du procédé à température ambiante.

Les résines utilisées, si elles permettent de satisfaire ce besoin, nécessitent donc d'être traitées thermiquement pendant un temps très long pour polymériser, ce qui ralentit les cadences de fabrication.

Elle a pour objectif de fournir un dispositif permettant d'améliorer les cadences de fabrication de profilés par pultrusion, notamment en permettant l'utilisation d'une résine à polymérisation rapide à température ambiante.

Cet objectif est atteint grâce à un dispositif pour l'imprégnation de fibres avec de la résine, pouvant notamment être utilisé dans une unité de fabrication d'un profilé creux par pultrusion, selon la revendication 1.

Avec le dispositif selon l'invention, des fibres continues, mises sous tension, peuvent être introduites et déplacées à travers la chambre d'injection, où elles sont imprégnées. La chambre d'injection est donc une chambre d'imprégnation des fibres.

Selon l'invention, la chambre d'injection, définie entre la paroi interne de l'élément périphérique et la paroi externe de l'élément central, borde l'élément central, selon un contour fermé pouvant présenter une forme générale de cercle, de carré, d'ellipse, d'ovale, ou toute forme analogue.

La chambre d'injection, qui enveloppe l'élément central, présente un volume limité par rapport aux bains de trempage de l'art antérieur. Or, les fibres qui la traversent sont perpétuellement en mouvement. Par ailleurs, comme une quantité de résine enrobant les fibres s'échappe continuellement de la chambre d'injection et comme une quantité de résine correspondante est injectée à l'intérieur de la chambre, une circulation forcée de la résine est créée à l'intérieur de la chambre. Par conséquent, la résine contenue dans la chambre d'injection ne stagne pas. On peut donc utiliser une résine polymérisable, notamment polymérisable rapidement, à température ambiante, l'agitation créée par les fibres l'empêchant de polymériser à l'intérieur de la chambre, même à température ambiante. En sortie de la chambre, par contre, la résine polymérise rapidement, éventuellement sans traitement thermique. Les cadences de production peuvent ainsi être augmentées, et l'énergie nécessaire à la polymérisation, réduite.

Grâce à la circulation continuelle de résine à l'intérieur de la chambre, l'imprégnation est plus efficace que dans les bains de trempage ordinaires.

Le dispositif permet, en outre, de mieux maîtriser les quantités de résine mises en oeuvre par rapport aux dispositifs de l'art antérieur, et de limiter les pertes de résine.

Un autre avantage du dispositif selon l'invention est que les fibres se déplacent à l'intérieur de la chambre d'injection sous forme d'un faisceau creux, et sont donc réparties sur toute la circonférence de la chambre d'injection.

Généralement, pour permettre le passage du faisceau creux de fibres, les extrémités d'entrée et de sortie de la chambre d'injection forment des ouvertures s'étendant sur toute la circonférence de la chambre d'injection, notamment des ouvertures annulaires.

Généralement, au moins à l'une des extrémités axiales de la chambre, le jeu conservé entre l'élément périphérique et l'élément central laisse s'échapper une faible quantité de résine. La circulation de la résine à l'intérieur de la chambre d'injection, entre les moyens d'amenée et l'entrée et/ou la sortie, est accélérée. La résine exerce ainsi une forte pression hydrostatique sur les fibres qui la traversent, permettant une imprégnation efficace. A noter que l'on pourrait aussi créer un orifice de fuite calibré pour la résine dans l'une des parois de la chambre d'injection.

Dans la présente demande, sauf précision contraire, la direction axiale correspond à la direction de l'axe principal du dispositif d'imprégnation, et une direction radiale est une direction perpendiculaire à cet axe. Sauf précision contraire, les adjectifs et adverbes axial, radial, axialement et radialement sont utilisés en référence aux directions axiale et radiale précitées. Enfin, sauf précision contraire, les adjectifs interne et externe sont utilisés en référence à une direction radiale de sorte que la partie ou la face interne (i.e. radialement interne) d'un élément est plus proche de l'axe du dispositif d'imprégnation que la partie ou la face externe (i.e. radialement externe) du même élément.

Par ailleurs, dans la demande, on entend par hauteur radiale de la chambre d'injection la distance mesurée, dans un plan radial, entre les deux parois opposées délimitant ladite chambre, autrement dit entre la paroi externe de l'élément central et la paroi interne de l'élément périphérique.

Selon l'invention, la chambre d'injection présente une zone intermédiaire entre lesdites extrémités d'entrée et de sortie, et sa hauteur radiale est plus faible aux extrémités d'entrée et de sortie que dans ladite zone intermédiaire.

On définit, dans la zone intermédiaire, une zone de trempage où la hauteur radiale de la chambre d'injection est maximale. C'est dans cette zone que les fibres sont entourées par un volume maximal de résine, et sont donc imprégnées le plus efficacement.

Selon un exemple avantageux, la hauteur maximale de la chambre d'injection est comprise entre 2 et 6 mm.

Selon un exemple, la hauteur radiale de la chambre d'injection décroit (progressivement) depuis la zone intermédiaire jusqu'à l'extrémité d'entrée ou l'extrémité de sortie de la chambre d'injection. On comprend que la zone sur laquelle la hauteur radiale décroit s'étend sur au moins un tronçon axial de la chambre.

De préférence, la hauteur radiale de la chambre d'injection décroit depuis la zone intermédiaire, notamment la zone de trempage, jusqu'aux extrémités d'entrée et de sortie.

De préférence, la chambre d'injection comporte un premier tronçon de hauteur radiale croissante (progressivement) et un deuxième tronçon de hauteur radiale décroissante (progressivement), la hauteur radiale maximale de la chambre d'injection étant mesurée entre le premier et le deuxième tronçon.

Les premier et deuxième tronçons peuvent être situés directement dans le prolongement l'un de l'autre. Dans ce cas, la zone de trempage est mesurée à la jonction entre les deux tronçons.

Selon une variante, ils peuvent aussi être séparés par un tronçon intermédiaire de hauteur radiale sensiblement constante, qui constitue alors la zone de trempage.

Selon une disposition de l'invention, les inclinaisons respectives, par rapport à l'axe principal, de la face interne de l'élément périphérique et de la face externe de l'élément central, sont faibles, et notamment comprises au maximum entre 2 et 10°.

De façon avantageuse, le dispositif d'imprégnation comprend une première zone d'appui pour les fibres au voisinage de l'entrée de la chambre d'injection et une deuxième zone d'appui pour les fibres au voisinage de la sortie de la chambre d'injection, lesdites première et deuxième zones d'appui étant configurées de sorte qu'une ligne les rejoignant dans un plan axial du dispositif soit, au moins sur une partie contenue dans la chambre d'injection, distante de l'élément périphérique et de l'élément central. Ces dispositions permettent d'éviter le frottement des fibres à l'intérieur de la chambre d'injection et d'assurer leur bonne imprégnation.

Par exemple, chaque zone d'appui est formée par un coin de l'élément périphérique ou de l'élément central, et en particulier par un coin formant l'extrémité d'une paroi dudit élément délimitant la chambre d'injection.

Selon un aspect avantageux de l'invention, l'élément central présente un profil externe évolutif, c'est-à-dire un diamètre externe variable le long de l'axe dudit élément.

Selon une disposition préférentielle de l'invention, le dispositif d'imprégnation comprend en outre un élément de guidage pour les fibres, situé en amont de l'entrée de la chambre d'injection. L'élément de guidage est, en outre, situé de préférence en amont de la zone d'appui pour les fibres prévue au voisinage de l'entrée de la chambre d'injection.

Selon un exemple, l'élément de guidage comprend une pluralité d'orifices de passage pour les fibres, répartis régulièrement dans une direction circonférentielle.

Avantageusement, les orifices de passage sont situés radialement à l'extérieur par rapport à l'entrée de la chambre d'injection.

Selon un exemple, le dispositif d'imprégnation comprend en outre un système d'ajustement du positionnement axial relatif entre l'élément périphérique et l'élément central. Cette disposition permet un ajustement de la hauteur radiale de la chambre d'injection, notamment à ses extrémités d'entrée et de sortie où les fibres entrent et sortent respectivement. Ceci est particulièrement avantageux lorsque le diamètre ou la quantité des fibres introduites dans la chambre d'injection est variable.

A noter que l'ajustement du jeu entre l'élément périphérique et l'élément central peut, dans le même temps, permettre de régler le débit de fuite de résine hors de la chambre d'injection et donc régler la pression isostatique de la résine à l'intérieur de la chambre d'injection.

Selon un exemple, les moyens d'amenée de résine comprennent au moins un orifice d'amenée formé dans une paroi de la chambre d'injection, ledit orifice débouchant de préférence au voisinage de la zone de trempage et étant, en particulier, distinct des extrémités d'entrée et de sortie de la chambre d'injection.

L'invention concerne également un procédé d'imprégnation de fibres avec de la résine, utilisant un dispositif d'imprégnation tel que défini précédemment, dans lequel les fibres sont introduites à l'intérieur de la chambre d'injection par son extrémité d'entrée, traversent la chambre d'injection où elles sont imprégnées de résine, et ressortent de la chambre d'injection par son extrémité de sortie.

Selon un exemple, la résine utilisée est une résine polymérisable à température ambiante.

L'invention concerne également une unité de fabrication d'un profilé creux par pultrusion, comprenant :
- un dispositif d'imprégnation tel que défini ci-dessus,
- un système d'alimentation adapté pour alimenter le dispositif d'imprégnation, et notamment l'intérieur de la chambre d'injection, avec de la résine,
- un noyau disposé en aval du dispositif d'imprégnation et aligné avec celui-ci le long de l'axe principal, adapté pour recevoir les fibres imprégnées sortant du dispositif d'imprégnation,
- une filière de conformation abritant au moins une partie dudit noyau, et
- un système de traction adapté pour mettre les fibres en tension.

Dans la présente demande, on entend par noyau un élément de support présentant un profil externe correspondant au profil interne du profilé que l'on souhaite fabriquer, et donc de section constante.

En outre, on entend par filière de conformation toute filière, généralement chauffée, dont le profil interne, généralement constant sur toute sa longueur, correspond au profil externe souhaité pour le profilé à fabriquer.

Selon un exemple, l'unité de fabrication comprend en outre au moins un organe d'enroulement satellitaire adapté pour déposer, sur le noyau, des fibres formant un angle non-nul avec la direction axiale. La superposition d'une première couche de fibres axiales et d'au moins une couche de fibres présentant une orientation différente, notamment une orientation formant un angle compris entre 2 et 45° avec la direction axiale, garantit au profilé une bonne tenue mécanique.

L'organe d'enroulement satellitaire est adapté pour déposer des fibres sur le noyau, en aval de la chambre d'injection et en amont de la filière de pultrusion, de préférence immédiatement à l'entrée de ladite filière de pultrusion.

L'invention concerne en outre l'utilisation d'une résine polymérisable à température ambiante, notamment une résine polymérisable rapidement à température ambiante, pour la fabrication de profilés creux par pultrusion.

L'invention concerne un procédé de fabrication d'un profilé creux par pultrusion utilisant une unité de fabrication telle que définie ci-dessus, comprenant au moins l'étape consistant à imprégner des fibres avec de la résine, en faisant passer lesdites fibres à l'intérieur de la chambre d'injection du dispositif d'imprégnation et l'étape de dépose des fibres ainsi imprégnées sur le noyau pour former une première couche de fibres.

Selon un mode de mise en oeuvre, la résine est une résine polymérisable à température ambiante.

Selon un mode de mise en oeuvre, le procédé selon l'invention comprend en outre l'étape de dépose d'au moins une autre couche de fibres sur ladite première couche, lesdites fibres formant un angle par rapport à la direction axiale, au moyen de l'organe d'enroulement satellitaire.

Plusieurs exemples de réalisation sont décrits dans le présent exposé. Toutefois, sauf précision contraire, les caractéristiques décrites en liaison avec un exemple de réalisation quelconque peuvent être appliquées à un autre exemple de réalisation.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- La figure 1 est une vue générale, en coupe axiale, d'une unité de fabrication selon un mode de réalisation de la présente invention ;
- La figure 2 est une autre vue générale, cette fois en perspective, de l'unité de fabrication de la figure 1 ;
- La figure 3 est une vue plus détaillée du dispositif d'imprégnation des figures 1 et 2 ;
- La figure 4 montre en vue arrière la collerette externe de l'élément central, formant élément de guidage pour les fibres ;
- La figure 5 est une vue en perspective du dispositif d'imprégnation, l'élément périphérique étant partiellement coupé pour permettre de visualiser l'intérieur de la chambre d injection.

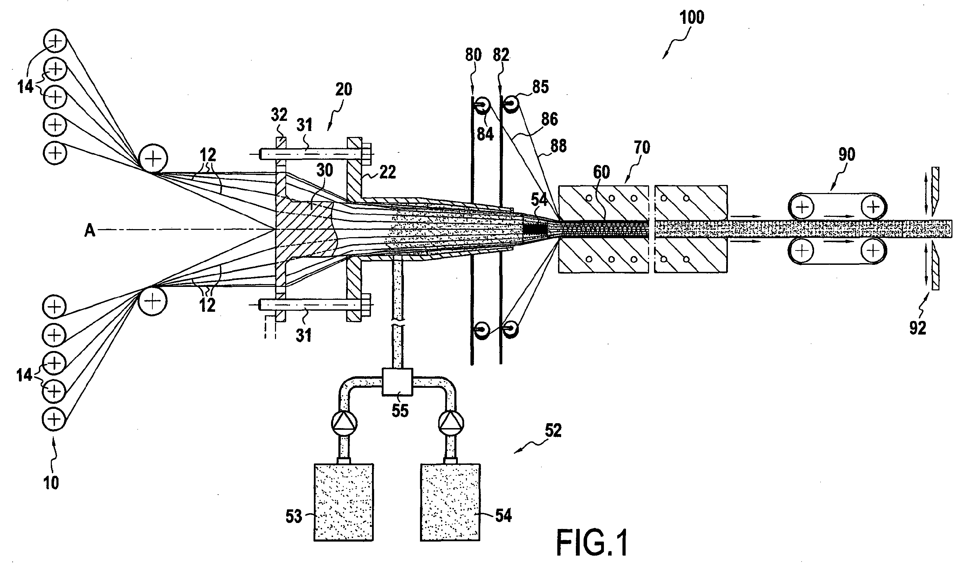

Une unité de fabrication 100 d'un profilé creux selon un mode de réalisation de la présente invention est représentée, de manière très schématique, sur la figure 1.

Elle comprend une réserve 10 de fibres 12, un dispositif d'imprégnation 20 de ces fibres relié à un système d'alimentation 52 en résine, un noyau 60 disposé en aval du dispositif d'imprégnation 20 et destiné à recevoir une couche de fibres imprégnées dans le dispositif d'imprégnation 20, deux organes d'enroulement satellitaires 80, 82, une filière de conformation 70, un système de traction des fibres 90 et un outil de découpe du profilé issu de la filière de conformation 92. Le système de traction 90 est situé à la suite de tous les autres éléments précités.

Pour la suite de la présente description, on définit la direction axiale comme la direction de l'axe principal du dispositif d'imprégnation 20 qui sera décrit plus en détail dans la suite. L'ensemble des éléments précités est disposé le long de cet axe.

Pour la suite de la description, on définit également l'amont et l'aval par rapport au sens de défilement des fibres à travers l'unité de fabrication 100 (de l'amont vers l'aval), c'est-à-dire de gauche à droite sur la figure 1.

La réserve 10 de fibres 12 peut prendre la forme d'un cantre supportant une pluralité de bobines 14. Les fibres 12 peuvent être des fibres de carbone, de basalte, ou encore des fibres de verre. A noter que l'on pourra, plus généralement, utiliser tout type de fibres adapté.

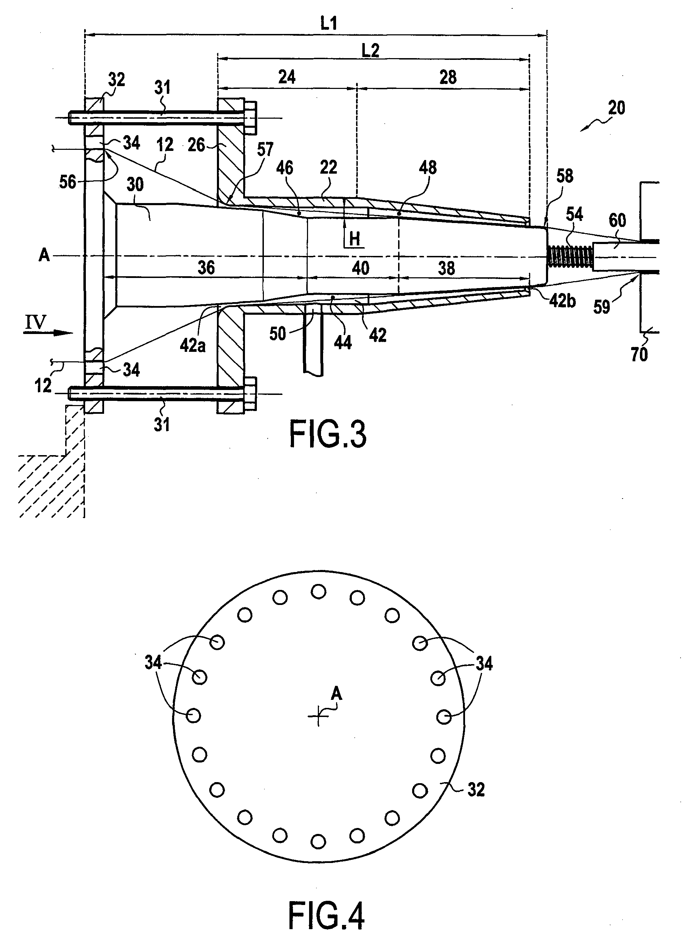

Les fibres 12 stockées sous forme de bobines 14 sont dépourvues de résine. Sous cette forme non-imprégnée, elles sont tractées, par le biais du système de traction 90, en direction de l'aval, et, en premier lieu, à travers le dispositif d'imprégnation 20 illustré plus en détail sur la figure 3.

Le dispositif d'imprégnation 20 comprend un élément périphérique creux 22 et un élément central 30 logé à l'intérieur de l'élément périphérique 22, les deux éléments étant coaxiaux d'axe A.

Dans l'exemple comme illustré plus en détail sur la figure 3, l'élément périphérique 22 se compose d'un premier tronçon 24 d'épaisseur et de diamètre sensiblement constants, c'est-à-dire en forme de cylindre droit, terminé à son extrémité amont par une collerette 26, et d'un deuxième tronçon 28, tronconique, convergeant vers l'axe A en s'éloignant du premier tronçon 24 (i.e. vers l'aval).

L'élément central 30 présente, dans l'exemple, une longueur axiale L1 plus grande que celle L2 de l'élément périphérique 22, de sorte qu'il dépasse de chaque côté de cet élément périphérique 22.

A son extrémité amont, l'élément central 30 comprend une collerette 32 percée d'une pluralité d'orifices 34 visibles sur la figure 4 et régulièrement répartis circonférentiellement. Comme il sera expliqué dans la suite, la collerette 32 forme un dispositif de guidage pour les fibres, destiné à les répartir régulièrement dans la direction circonférentielle en entrée du dispositif d'imprégnation. A cette fin, un nombre prédéfini de fibres est amené à traverser chaque orifice de passage 34. Conformément à ce qui vient d'être dit, la collerette 32 de l'élément central 30 est située en amont de l'élément périphérique 22. L'intérêt d'une telle configuration sera décrit plus en détail dans la suite.

L'élément central 30 se décompose ensuite en trois tronçons situés dans le prolongement l'un de l'autre, un premier tronçon convergeant vers l'aval 36, un tronçon intermédiaire 40 de diamètre externe sensiblement constant, et un second tronçon convergeant vers l'aval 38.

Comme illustré sur les figures 1 à 3, l'élément central 30 est fixé à un support, pouvant être un bâti fixé au sol ou le sol lui-même. L'élément périphérique 22 est, lui, relié à l'élément central 30 par un système de vis 31 monté entre les collerettes externes respectives 32, 26 des deux éléments et constituant un système d'ajustement de leur positionnement axial respectif. Le vissage plus ou moins important des vis 31 permet d'ajuster le positionnement de l'élément périphérique 22 par rapport à l'élément central 30 le long de l'axe A.

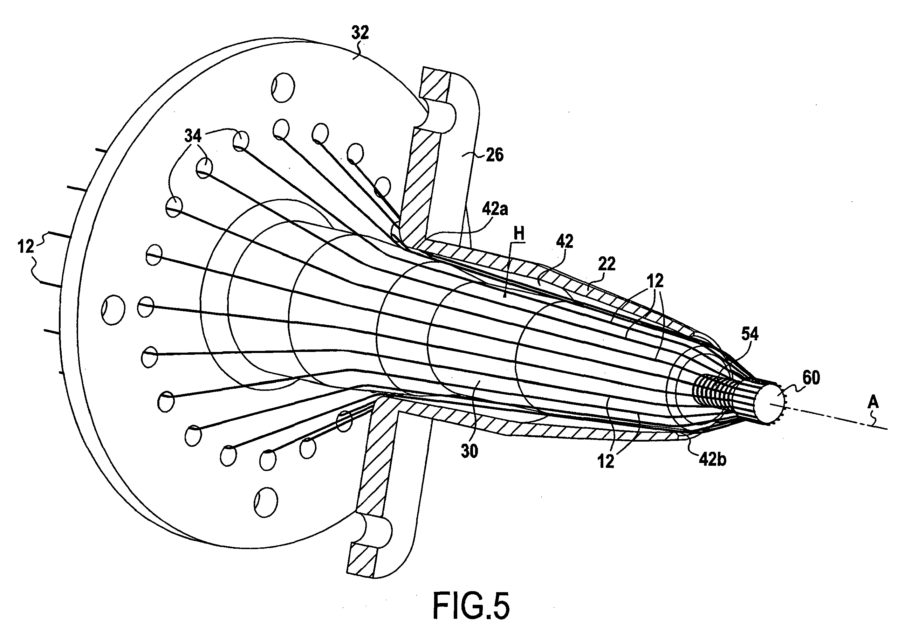

En tout point, un jeu est conservé entre l'élément périphérique 22 et l'élément central 30. Une chambre, ci-après chambre d'injection 42, est ainsi délimitée entre la paroi interne de l'élément périphérique 22 et la paroi externe de l'élément central 30. La chambre d'injection est illustrée plus en détail notamment sur la figure 5.

L'élément périphérique 22 et l'élément central 30 étant tous deux de révolution, la chambre d'injection 42 forme une cavité annulaire.

Les profils de ces deux éléments étant, par ailleurs, évolutifs, la hauteur radiale de la chambre d'injection est également variable le long de l'axe A. Autrement dit, le jeu entre l'élément central et l'élément périphérique est plus ou moins important selon le positionnement le long de l'axe A. En déplaçant l'élément périphérique 22 au moyen des vis 31, il est d'ailleurs possible d'ajuster le jeu, et notamment les jeux minimal et maximal, entre les deux éléments.

En tout état de cause, la chambre d'injection 42 débouche à son extrémité d'entrée 42a où entrent les fibres et son extrémité de sortie où les fibres ressortent 42b, les ouvertures d'entrée et de sortie étant annulaires, centrées autour de l'axe A, pour le passage d'un faisceau de fibres creux.

La plus faible hauteur radiale de la chambre d'injection au niveau de ses extrémités d'entrée et de sortie est comprise habituellement entre 1 et 5 mm.

Plus généralement, au niveau de l'entrée et de la sortie de la chambre d'injection, le jeu entre les deux pièces 22, 30 est minimal, mais suffisant pour permettre le passage des fibres 12, et, dans le même temps, former un orifice de fuite pour la résine. La fuite d'une faible quantité de résine hors de la chambre d'injection 42 permet une circulation forcée de la résine à l'intérieur de ladite chambre 42. Ceci, combiné au fait que les fibres sont en perpétuel mouvement à l'intérieur de la chambre 42, permet d'empêcher la stagnation de la résine l'intérieur de la chambre d'injection, et donc sa polymérisation.

Dans une zone intermédiaire définie entre l'entrée et la sortie 42a, 42b, la chambre d'injection 42 présente une hauteur radiale plus importante pour former une réserve de résine de volume suffisant pour que les fibres trempent et s'y imprègnent de façon efficace.

Comme il ressort de la figure 3, l'élément périphérique 22 présente un orifice 50 qui débouche au niveau où la chambre d'injection a sa hauteur radiale la plus élevée (cette zone sera aussi appelée zone de trempage). Cet orifice 50 forme un orifice d'amenée de la résine, connecté au système d'alimentation en résine 52, lui-même constitué ici d'une réserve de polymère à terminaison réactive, par exemple polyol, 53, d'une réserve de réticulant (par exemple isocyanate) 54, et d'une chambre de mélange 55 pour ces deux composants comme illustré sur la figure 1, pour former, par exemple, après réticulation une résine polyuréthane.

Dans l'exemple illustré, la hauteur radiale H de la chambre d'injection 42 croit progressivement sur un premier tronçon 46 s'étendant depuis l'extrémité d'entrée 42a en direction de la zone de trempage, et décroit ensuite en direction de l'aval, sur un deuxième tronçon 48, un tronçon intermédiaire 44 constituant la zone de trempage. Ces dispositions permettent une meilleure imprégnation des fibres, puis un essorage des fibres avant leur sortie de la chambre d'injection.

La hauteur radiale H maximale et, de fait, le volume total de la chambre d'injection, dépendent des pentes des faces respectivement interne et externe de l'élément périphérique 22 et de l'élément central 30. Cette hauteur radiale est généralement limitée, en choisissant des pentes relativement faibles, de l'ordre de 2° à 10°, de façon à éviter les points morts à l'intérieur de la chambre, c'est-à-dire les zones dans lesquelles aucune fibre n'est en mouvement, et où la résine risquerait de polymériser du fait d'une stagnation prolongée.

Selon l'invention, la hauteur radiale maximale de la chambre sera au plus égale à 1/20^{ème} du périmètre maximal de la chambre d'injection. De manière encore plus préférentielle, la hauteur radiale maximale de la chambre sera au plus égale à 1/10^{ème} du rayon maximal mesuré entre l'axe A du dispositif et la face externe de la chambre d'injection 42.

Selon un exemple avantageux, la hauteur maximale de la chambre d'injection est comprise entre 2 et 6 mm.

La figure 3 illustre plus en détail une fibre 12 traversant le dispositif d'imprégnation. On peut observer que sa trajectoire est brisée, autrement dit divisée en tronçons rectilignes de pentes différentes.

La fibre 12 traverse l'un des orifices de passage 34 selon une direction sensiblement parallèle à l'axe A puis se dirige vers la chambre d'injection 42.

Comme l'orifice de passage 34 est situé radialement plus à l'extérieur que l'entrée 42a de la chambre d'injection 42, la fibre 12 prend appui sur l'élément de guidage 32 au niveau d'une zone d'appui 56, puis est déviée radialement en direction de l'axe A, vers l'entrée 42a de la chambre d'injection 42 jusqu'à une zone d'appui 57 située à la jonction entre la paroi interne de l'élément périphérique 22 et sa face d'extrémité amont.

La fibre 12 traverse alors la chambre d'injection 42, jusqu'à une zone d'appui 58 formée à l'extrémité aval de l'élément central 30, à la jonction entre la paroi externe de l'élément central 30 et sa face d'extrémité aval. Là, la fibre 12 est déviée vers la zone d'entrée 59 de la filière de conformation, sur le noyau 60.

Autrement dit, une rupture de pente de la fibre 12 est marquée à chaque zone d'appui 56, 57, 58, 59.

Chaque fibre 12 a ainsi une trajectoire privilégiée (ou forcée) à l'intérieur de la chambre d'injection 42.

Cette trajectoire est choisie pour qu'à l'intérieur de la chambre 42, la fibre 12 soit, le plus possible, distante des parois de l'élément central 30 et de l'élément périphérique 22. Ceci permet de garantir une bonne imprégnation, en évitant que la fibre 12 ne se « colle » sur les parois et en assurant qu'elle soit entièrement enrobée.

Comme il ressort des figures 1, 2 et 3, l'élément central 30 est relié, par l'intermédiaire d'une tige 54, notamment une tige filetée, à un noyau 60 disposé en aval et d'axe A.

Le noyau 60 présente une section constante correspondant à la section interne désirée pour le profilé fabriqué.

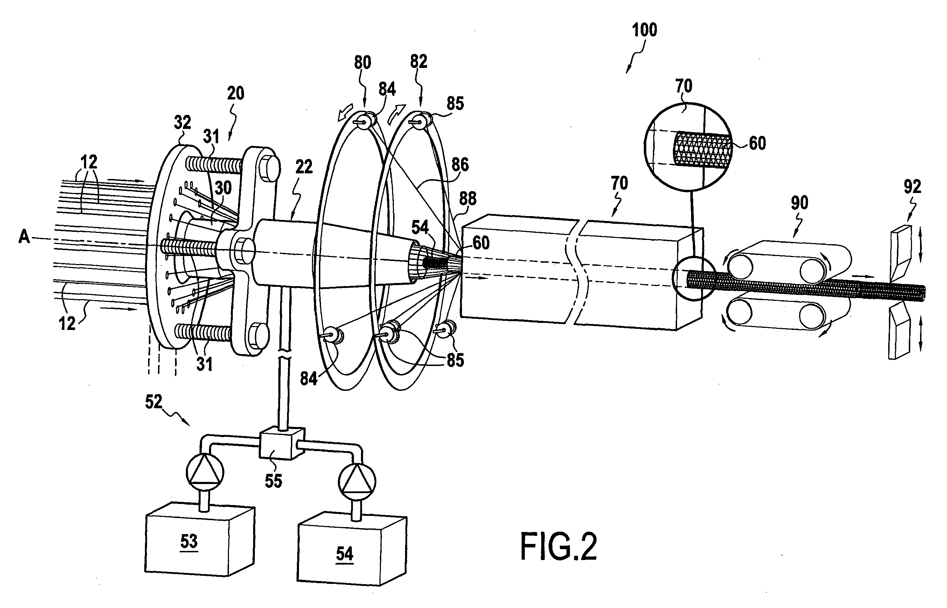

Des figures 1 et 2, il ressort qu'une partie du noyau 60 traverse une filière 70 dite de conformation, destinée à la mise en forme finale du profilé ainsi qu'au traitement thermique de la résine. La filière de conformation est configurée de sorte que son profil interne correspond sensiblement au profil externe souhaité pour le profilé fabriqué. Elle comprend par ailleurs des moyens de chauffage, permettant le chauffage de la résine et sa polymérisation plus rapide.

Le profilé est ainsi mis en forme entre le noyau et la surface interne de la filière de conformation. Ces aspects étant bien connus de l'homme du métier, ils ne seront pas décrits plus en détail dans la suite.

Il est également bien connu qu'un profilé creux réalisé par pultrusion a une meilleure tenue mécanique lorsqu'il est constitué de plusieurs couches de fibres superposées orientées selon des directions différentes.

Dans l'exemple illustré, deux organes de d'enroulement satellitaires 80, 82 sont prévus, à cette fin, dans l'unité de fabrication 100.

De façon connue, chacun de ces organes d'enroulement 80, 82 est sous la forme d'un satellite comprenant au moins une bobine embarquée 84, 85 et adapté à tourner autour de l'axe A.

Les organes d'enroulement satellitaires 80, 82 sont disposés indifféremment au droit du dispositif d'imprégnation 20 ou en amont de ce dernier, la condition essentielle à réaliser étant que les fibres 86, 88 issues desdites bobines 84, 85 puissent être déposées sur le noyau 60, en aval de la zone de dépose des fibres issues du dispositif d'imprégnation 20 mais en amont de la filière de conformation 70.

Le procédé de réalisation d'un profilé creux par pultrusion, à l'aide de l'unité de fabrication 100 décrite précédemment, est décrit plus en détail ci-après.

Des fibres non-imprégnées 12, issues de la réserve 10, sont passées à travers l'élément de guidage 32, puis à travers la chambre d'injection 42 du dispositif d'imprégnation 20, remplie de résine polymérisable à température ambiante. Le déplacement des fibres 12 se fait au moyen du système de traction 90.

Une fois imprégnées, les fibres 12 sont plaquées contre le noyau 60, auquel elles adhèrent du fait de la viscosité de la résine.

Une fois plaquées contre le noyau 60, les fibres 12 forment une première couche de fibres unidirectionnelles, dirigées axialement, aussi appelée couche de support.

En amont de la filière de conformation 70, une seconde couche de fibres 86, aussi appelée couche de renfort, est déposée sur ladite première couche. Les fibres 86 de cette seconde couche sont issues d'un premier organe d'enroulement rotatif 80, tournant autour de l'axe A et adapté à les déposer, sur le noyau 60, avec un angle non nul par rapport à la direction axiale, par exemple compris entre 2 et 45°. Les fibres 86 issues de l'organe d'enroulement ne sont pas imprégnées à l'origine mais elles se couvrent de résine au contact de la première couche de fibres, c'est-à-dire une fois mises en place sur le noyau.

Dans l'exemple, une troisième couche de fibres 88, également orientées selon un angle non-nul par rapport à la direction axiale, est déposée par le deuxième organe d'enroulement 82. Elle aussi est imprégnée de résine au contact des couches sous-jacentes.

Le profilé, constitué de la superposition des trois couches précitées, pénètre alors dans la filière de conformation 70, où il est mis en forme et chauffé de façon à cuire la résine.

En sortie de l'unité de fabrication 100, le profilé continu ainsi formé est découpé en une pluralité de profilés de longueur souhaitée, au moyen de l'outil de découpe 92.

## Revendications

1. Dispositif (20) pour l'imprégnation de fibres (12) avec de la résine (32), pouvant notamment être utilisé dans une unité de fabrication (100) d'un profilé creux par pultrusion,
ledit dispositif (20) comprenant :
- un élément périphérique creux (22) comprenant un axe principal (A)
- un élément central (30) coaxial à l'élément périphérique (22) et logé au moins partiellement à l'intérieur de ce dernier,
- une chambre d'injection circonférentielle (42) est délimitée entre la paroi interne de l'élément périphérique (22) et la paroi externe de l'élément central (30), ladite chambre d'injection présentant une extrémité d'entrée (42a) ouverte pour l'entrée des fibres et une extrémité de sortie (42b) ouverte pour la sortie des fibres, et
- une zone intermédiaire entre lesdites extrémités d'entrée et de sortie, et
- des moyens d'amenée de résine communiquant avec ladite chambre d'injection,
la hauteur radiale (H) de la chambre d'injection étant plus faible à ses extrémités d'entrée et de sortie (42a, 42b) que dans ladite zone intermédiaire, et **caractérisé en ce que** la hauteur radiale de la chambre est au plus égale à 1/20^{ème} du périmètre maximal de la chambre d'injection.

2. Dispositif d'imprégnation (20) selon la revendication 1, dans lequel la hauteur radiale (H) de la chambre d'injection (42) décroit depuis la zone intermédiaire jusqu'à l'extrémité d'entrée (42a).

3. Dispositif d'imprégnation (20) selon la revendication 1 ou 2, dans lequel la hauteur radiale (H) de la chambre d'injection (42) décroit depuis la zone intermédiaire jusqu'à l'extrémité de sortie (42b).

4. Dispositif d'imprégnation selon l'une quelconque des revendications 1 à 3, dans lequel la hauteur radiale de la chambre est au plus égale à 1/10^{ème} du rayon maximal mesuré entre l'axe (A) et la paroi interne de l'élément périphérique.

5. Dispositif d'imprégnation (20) selon l'une quelconque des revendications 1 à 4, comprenant une première zone d'appui pour les fibres à l'entrée de la chambre d'injection et une deuxième zone d'appui pour les fibres à la sortie de la chambre d'injection, lesdites première et deuxième zones d'appui étant configurées de sorte qu'une ligne les rejoignant dans un plan axial du dispositif soit, au moins sur une partie contenue dans la chambre d'injection (42), distante de l'élément périphérique (22) et de l'élément central (30).

6. Dispositif d'imprégnation selon la revendication 5, dans lequel chaque zone d'appui est formée par un coin de l'élément périphérique (22) ou de l'élément central (30).

7. Dispositif d'imprégnation (20) selon l'une quelconque des revendications 1 à 6, dans lequel l'élément périphérique creux (22) et l'élément central (30) sont des solides de révolution.

8. Dispositif d'imprégnation (20) selon l'une quelconque des revendications 1 à 7, comprenant en outre un système d'ajustement (31) du positionnement axial relatif entre l'élément périphérique (22) et l'élément central (30).

9. Dispositif d'imprégnation (20) selon l'une quelconque des revendications 1 à 8, dans lequel les moyens d'amenée de résine comprennent au moins un orifice d'amenée formé dans une paroi de la chambre d'injection.

10. Dispositif d'imprégnation (20) selon la revendication 9, dans lequel l'orifice d'amenée est distinct des extrémités ouvertes d'entrée et de sortie (42a, 42b) de la chambre d'injection (42).

11. Dispositif d'imprégnation (20) selon la revendication 9 ou 10, dans lequel l'orifice d'amenée est formé dans la zone intermédiaire de la chambre d'injection, notamment dans une zone où ladite chambre (42) présente sa plus grande hauteur radiale (H).

12. Dispositif d'imprégnation (20) selon l'une quelconque des revendications 1 à 11, dans lequel la hauteur maximale de la chambre d'injection (42) est comprise entre 2 et 6 mm.

13. Unité de fabrication (100) d'un profilé creux par pultrusion, comprenant :
- un dispositif d'imprégnation (20) selon l'une quelconque des revendications 1 à 12,
- un système d'alimentation (52) adapté pour alimenter le dispositif d'imprégnation avec de la résine,
- un noyau (60) disposé en aval du dispositif d'imprégnation (20) et aligné avec celui-ci le long de l'axe principal, adapté pour recevoir les fibres imprégnées sortant du dispositif d'imprégnation,
- une filière de conformation (70) abritant au moins une partie dudit noyau (60), et
- un système de traction (90) adapté pour mettre les fibres en tension.

14. Procédé de fabrication d'un profilé creux par pultrusion utilisant une unité de fabrication selon la revendication 13, comprenant au moins l'étape consistant à imprégner des fibres (12) avec de la résine, en faisant passer lesdites fibres (12) à l'intérieur de la chambre d'injection (42) du dispositif d'imprégnation (20) et l'étape de dépose des fibres ainsi imprégnées sur le noyau pour former une première couche de fibres.

15. Procédé de fabrication selon la revendication 14, dans lequel la résine est une résine polymérisable à température ambiante.

## Patentansprüche

1. Vorrichtung (20) für das Imprägnieren von Fasern (12) mit Harz (32), die insbesondere in einer Einheit zur Herstellung (100) eines Hohlprofils durch Pultrusion eingesetzt werden kann,
wobei die Vorrichtung (20) umfasst:
- ein hohles Umfangselement (22) mit einer Hauptachse (A),
- ein mittleres Element (30), das zu dem Umfangselement (22) koaxial und wenigstens teilweise in letzterem aufgenommen ist,
- eine umfangseitige Einspritzkammer (42), die zwischen der Innenwand des Umfangselements (22) und der Außenwand des mittleren Elements (30) begrenzt ist, wobei die Einspritzkammer ein offenes Eintrittsende (42a) für den Eintritt der Fasern und ein offenes Austrittsende (42b) für den Austritt der Fasern aufweist, und
- einen Zwischenbereich zwischen dem Eintritts- und dem Austrittsende und
- Mittel zum Zuführen von Harz, die mit der Einspritzkammer in Verbindung stehen,
wobei die radiale Höhe (H) der Einspritzkammer an ihrem Eintritts- und ihrem Austrittsende (42a, 42b) geringer als in dem Zwischenbereich ist, und
**dadurch gekennzeichnet, dass** die radiale Höhe der Kammer höchstens gleich 1/20 des maximalen Umfangs der Einspritzkammer ist.

2. Imprägnierungsvorrichtung (20) nach Anspruch 1, bei der die radiale Höhe (H) der Einspritzkammer (42) von dem Zwischenbereich bis zu dem Eintrittsende (42a) abnimmt.

3. Imprägnierungsvorrichtung (20) nach Anspruch 1 oder 2, bei der die radiale Höhe (H) der Einspritzkammer (42) von dem Zwischenbereich bis zu dem Austrittsende (42b) abnimmt.

4. Imprägnierungsvorrichtung nach einem der Ansprüche 1 bis 3, bei der die radiale Höhe der Kammer höchstens gleich 1/10 des zwischen der Achse (A) und der Innenwand des Umfangselements gemessenen maximalen Radius ist.

5. Imprägnierungsvorrichtung (20) nach einem der Ansprüche 1 bis 4, umfassend einen ersten Auflagebereich für die Fasern am Eingang der Einspritzkammer und einen zweiten Auflagebereich für die Fasern am Ausgang der Einspritzkammer, wobei der erste und der zweite Auflagebereich derart gestaltet sind, dass eine Linie, die sie in einer axialen Ebene der Vorrichtung wieder zusammenführt, wenigstens über einen in der Einspritzkammer (42) enthaltenen Teil von dem Umfangselement (22) und von dem mittleren Element (30) entfernt ist.

6. Imprägnierungsvorrichtung nach Anspruch 5, bei der jeder Auflagebereich durch eine Ecke des Umfangselements (22) oder des mittleren Elements (30) gebildet ist.

7. Imprägnierungsvorrichtung (20) nach einem der Ansprüche 1 bis 6, bei der das hohle Umfangselement (22) und das mittlere Element (30) Rotationskörper sind.

8. Imprägnierungsvorrichtung (20) nach einem der Ansprüche 1 bis 7, die ferner ein System zur Einstellung (31) der axialen Relativpositionierung zwischen dem Umfangselement (22) und dem mittleren Element (30) umfasst.

9. Imprägnierungsvorrichtung (20) nach einem der Ansprüche 1 bis 8, bei der die Harzzuführmittel wenigstens eine Zuführöffnung, die in einer Wand der Einspritzkammer ausgebildet ist, umfassen.

10. Imprägnierungsvorrichtung (20) nach Anspruch 9, bei der die Zuführöffnung von den offenen Eintritts- und Austrittsenden (42a, 42b) der Einspritzkammer (42) getrennt ist.

11. Imprägnierungsvorrichtung (20) nach Anspruch 9 oder 10, bei der die Zuführöffnung in dem Zwischenbereich der Einspritzkammer ausgebildet ist, insbesondere in einem Bereich, in dem die Kammer (42) ihre größte radiale Höhe (H) aufweist.

12. Imprägnierungsvorrichtung (20) nach einem der Ansprüche 1 bis 11, bei der die maximale Höhe der Einspritzkammer (42) zwischen 2 und 6 mm beträgt.

13. Einheit zur Herstellung (100) eines Hohlprofils durch Pultrusion, umfassend:
- eine Imprägnierungsvorrichtung (20) nach einem der Ansprüche 1 bis 12,
- ein Zuführsystem (52), das dazu ausgelegt ist, die Imprägnierungsvorrichtung mit Harz zu versorgen,
- einen Kern (60), welcher der Imprägnierungsvorrichtung (20) nachgeordnet ist und mit dieser entlang der Hauptachse fluchtet, dazu ausgelegt ist, die aus der Imprägnierungsvorrichtung austretenden imprägnierten Fasern aufzunehmen,
- eine Formdüse (70), die wenigstens einen Teil des Kerns (60) aufnimmt, und
- ein Zugsystem (90), das dazu ausgelegt ist, die Fasern unter Spannung zu setzen.

14. Verfahren zur Herstellung eines Hohlprofils durch Pultrusion, das eine Herstellungseinheit nach Anspruch 13 verwendet, umfassend wenigstens den Schritt, der darin besteht, Fasern (12) dadurch mit Harz zu imprägnieren, dass man die Fasern (12) innerhalb der Einspritzkammer (42) der Imprägnierungsvorrichtung (20) durchlaufen lässt, sowie den Schritt des Ablegens der so imprägnierten Fasern auf dem Kern, um eine erste Faserlage zu bilden.

15. Herstellungsverfahren nach Anspruch 14, bei dem das Harz ein bei Raumtemperatur polymerisierbares Harz ist.

## Claims

1. A device (20) for impregnating fibers (12) with resin (32), which may be used in a unit (100) for manufacturing a hollow profile by pultrusion,
said device (20) comprising:
- a hollow peripheral element (22) comprising a main axis (A),
- a central element (30) coaxial with the peripheral element (22) and at least partly housed inside the latter;
- a circumferential injection chamber (42) delimited between the internal wall of the peripheral element (22) and the external wall of the central element (30), said injection chamber having an inlet end (42a) open for entry of the fibers and an outlet end (42b) open for exit of the fibers, and
- an intermediate area between said entry and exit ends, and
- means for supplying resin communicating with said injection chamber,
the radial height (H) of the injection chamber being smaller at its entry and exit ends (42a, 42b) than in said intermediate area, and **characterized in that** the radial height (H) of the chamber is at most equal to 1/20^{th} of the maximum perimeter of the injection chamber.

2. The impregnation device (20) according to claim 1, wherein the radial height (H) of the injection chamber (42) decreases from the intermediate area as far as the entry end (42a).

3. The impregnation device (20) according to claim 1 or 2, wherein the radial height (H) of the injection chamber (42) decreases from the intermediate area as far as the exit end (42b).

4. The impregnation device according to any one of claims 1 to 3, wherein the radial height of the chamber is at most equal to 1/10^{th} of the maximum radius measured between the axis (A) and the internal wall of the peripheral element.

5. The impregnation device (20) according to any one of claims 1 to 4, comprising a first supporting area for the fibers at the entry of the injection chamber and a second supporting area for the fibers at the exit of the injection chamber, said first and second supporting areas being configured so that a line joining them up in an axial plane of the device, is, at least on a portion contained in the injection chamber (42), distant from the peripheral element (22) and from the central element (30).

6. The impregnation device according to claim 5, wherein each supporting area is formed by a corner of the peripheral element (22) or of the central element (30).

7. The impregnation device (20) according to any one of claims 1 to 6, wherein the hollow peripheral element (22) and the central element (30) are axisymmetric solids.

8. The impregnation device (20) according to any one of claims 1 to 7, further comprising a system (31) for adjusting the relative axial position between the peripheral element (22) and the central element (30).

9. The impregnation device (20) according to any one of claims 1 to 8, wherein the means supplying resin comprise at least one supply orifice formed in a wall of the injection chamber.

10. The impregnation device (20) according to claim 9, wherein the supply orifice is distinct from the open entry and exit ends (42a, 42b) of the injection chamber (42).

11. The impregnation device (20) according to claim 9 or 10, wherein the supply orifice is formed in the intermediate area of the injection chamber, notably in an area where said chamber (42) has its greatest radial height (H).

12. The impregnation device (20) according to any one of claims 1 to 11, wherein the maximum height of the injection chamber (42) is comprised between 2 and 6 mm.

13. A unit (100) for manufacturing a hollow profile by pultrusion, comprising:
- an impregnation device (20) according to any one of claims 1 to 12,
- a supply system (52) adapted for supplying the impregnation device with resin,
- a core (60) positioned downstream from the impregnation device (20) and aligned with the latter along the main axis, adapted for receiving the impregnated fibers exiting the impregnation device,
- a conformation die (70) harboring at least one portion of said core (60), and
- a traction system (90) adapted for tensioning the fibers.

14. A method for manufacturing a hollow profile by pultrusion using a manufacturing unit according to claim 13, comprising at least the step consisting of impregnating fibers (12) with resin, by having said fibers (12) pass inside the injection chamber (42) of the impregnation device (20) and the step for depositing the thereby impregnated fibers on the core in order to form a first layer of fibers.

15. The manufacturing method according to claim 14, wherein the resin is a resin which may be polymerized at room temperature.
